# EUROPEAN PATENT APPLICATION

(11) **EP 2 116 963 A1**
(43) Date of publication of application: **11.11.2009**
(21) Application number: 07817191.5
(22) Date of filing: 31.10.2007
(51) Int. Cl.: G06Q 10/00

(54) **QUALITY INSPECTION METHOD, QUALITY INSPECTION DEVICE AND QUALITY INSPECTION SYSTEM**

(30) Priority: 30.01.2007 CN 200710002776
(71) Applicant: Huawei Technologies Co., Ltd., Longgang District, Shenzhen Guangdong 518129 (CN)
(72) Inventor: WANG, Wei, Shenzhen Guangdong 518129 (CN)
(74) Representative: Körber, Martin Hans
(86) International application number: PCT/CN2007/071000
(87) International publication number: WO 2008/092349

(57) **Abstract**

An embodiment of the present invention discloses a quality check (QC) method, including: determining a QC object to be checked and its QC content (201); searching a system where QC data needed for the QC is located, according to the determined QC object and its QC content, and obtaining the corresponding QC data from the system (202); and computing QC result according to the obtained QC data (203). With the QC method, it may perform a uniform hierarchical QC on service representatives in different systems and QC results can be stored uniformly in the same database, which facilitates query, statistics and analysis of the QC results. An embodiment of the present invention also discloses a QC system including a database and QC device. The QC device includes a user input unit and a master control unit.

## Description

### Technical Field of the Invention

The invention relates to the field of communication technologies, and more particularly, to a method, device and system for quality check (QC).

### Background of the Invention

Generally, the daily operation support of a customer service center is achieved by the cooperation of a plurality of systems, such as a seat, a work flow, a knowledge library and an outbound call. Each system has specific users, which are referred to as service representatives collectively. In order to assess and evaluate the work condition of the service representatives, it is necessary to perform a quality check function on them.

The assess criteria for the service representatives of each system vary significantly due to that each of the systems has different functions. Meanwhile, each system includes different information, therefore, QC staff needs to review the information based on the real situation when they conduct the quality check, so as to evaluate the work performance of the service representatives precisely and objectively. Furthermore, with the development of the service, more and more new systems may be deployed in the customer service center. The assessment on the service representatives of these new systems is very important.

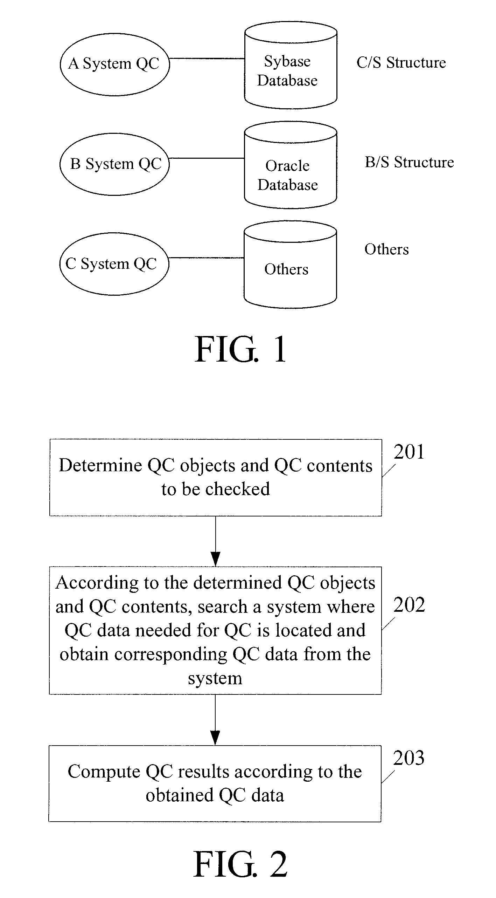

In the operation of the current customer service center, each system provides quality check functions independently; and some systems even do not provide quality check functions. Fig. 1 shows a conventional customer service center which performs QC. It can be seen that if the QC staff intends to perform QC on the service representatives using the individual systems, the QA staff has to use QC modules in respective systems to perform QC. Also, the QC results are stored dispersedly in the individual systems. The performing QC in each system respectively may result in the following problems:
1. Each system has different architectures, such as a client/server (C/S) structure and a browser/server (B/S) structure, thus the QC architectures are also varied;
2. Operations of QC functions in individual systems vary significantly, which is inconvenient for QA staff's work;
3. The QC criteria are distributed in different systems, thus lacking a general definition and management channel, which is disadvantageous for the central management of the customer service center; and
4. The QC results are distributed in different systems and stored in different manners, which is disadvantageous for query, statistics, and analysis.

### Summary of the Invention

An embodiment of the present invention provides a QC device and a QC system, which can perform hierarchical QC on service representatives of a plurality of systems.

An embodiment of the present invention also provides a QC method, which can perform hierarchical QC on service representatives of a plurality of systems.

The embodiments of the present invention provide the following technical solutions.

A method for quality check (QC) is provided, which includes:
determining a QC object to be checked and a QC content corresponding to the QC object;
according to the determined QC object and the QC content, searching a system where QC data needed for the QC is located, to obtain corresponding QC data from the system; and
computing a QC result according to the obtained QC data.

A QC device is provided, which includes a user input unit and a master control unit;
the user input unit is adapted to transmit to the master control unit a QC object and a QC content corresponding to the QC object received from a user; and
the master control unit is adapted to search for a system where QC data needed for the QC is located, according to the QC object and the QC content received from the user input unit, obtain the corresponding QC data from the system and compute a QC result according to the obtained QC data.

A QC system is provided, which includes a database and a QC device; the QC device includes a user input unit and a master control unit; and the database is adapted to store a QC object, a QC content and a QC result;
the user input unit is adapted to transmit to the master control unit the QC object and the QC content received from a user;
the master control unit is adapted to set the QC object and the QC content corresponding to the QC object according to QC data from different systems and store the QC object and the QC content in the database; search the QC object and the QC content stored in the database for a system where QC data needed for the QC is located, according to the QC object and the QC content received from the user input unit; obtain the corresponding QC data from the system; compute a QC result according to the obtained QC data; and store the computed QC result in the database.

In the embodiments of the present invention, the QC objects and QC contents that may be checked are set in the database, according to QC data of different systems, so that a uniform QC standard management can be set up for the different systems. When performing QC operation, the QC object to be checked and its QC content are first determined. Then a system where QC data needed for the QC is located is searched, according to the QC object and its QC content. The corresponding QC data is obtained from the different systems, according to the uniform configuration of interfaces between the QC device and the systems. Finally, a uniform QC result is computed and stored according to the QC data. Thus, a uniform hierarchical QC can be performed on service representatives of different systems and the QC results can be stored uniformly in the same database, for convenient query, statistics and analysis.

### Brief Description of the Drawings

Fig. 1 shows a conventional customer service center which performs QC;
Fig. 2 is an overall flow chart of a QC method according to an embodiment of the present invention;
Fig. 3 is a structure diagram of a QC system according to an embodiment of the present invention;
Fig. 4 is a structure diagram of a QC device according to an embodiment of the present invention;
Fig. 5 is a flow chart of a QC method according to an embodiment of the present invention; and
Fig. 6 is schematic view of an assessment content including two levels of assessment items.

### Detailed Description of the Invention

In order to make the above objects, technical solutions and advantages of embodiments of the present invention more apparent, detailed description of the embodiments is given below with reference to the accompany drawings.

According to the embodiments of the present invention, an uniform QC criterion for service representatives of the systems is provided; QC data needed for QC is obtained from different systems through an uniform QC data input; and QC results are computed in an uniform way and are output to a database.

Fig. 2 is an overall flow chart of a QC method according to an embodiment of the invention. Before performing the flow according to the embodiment, the QC objects and their QC contents are set according to the QC data of different systems. The set QC objects and their QC contents are QC objects and QC contents that may be checked by the QC method. As shown in Fig. 2, the method includes:
Step 201: Determining the QC objects and their QC contents to be checked;
Step 202: Searching a system where QC data needed for the QC is located and obtaining the corresponding QC data from the system; and
Step 203: Computing QC results according to the obtained QC data.

The above is an overall summary for the embodiments of the present invention. In the following, detailed embodiments of the present invention will be elaborated, by taking a QC system and method used in a customer service center for example.

### Embodiment:

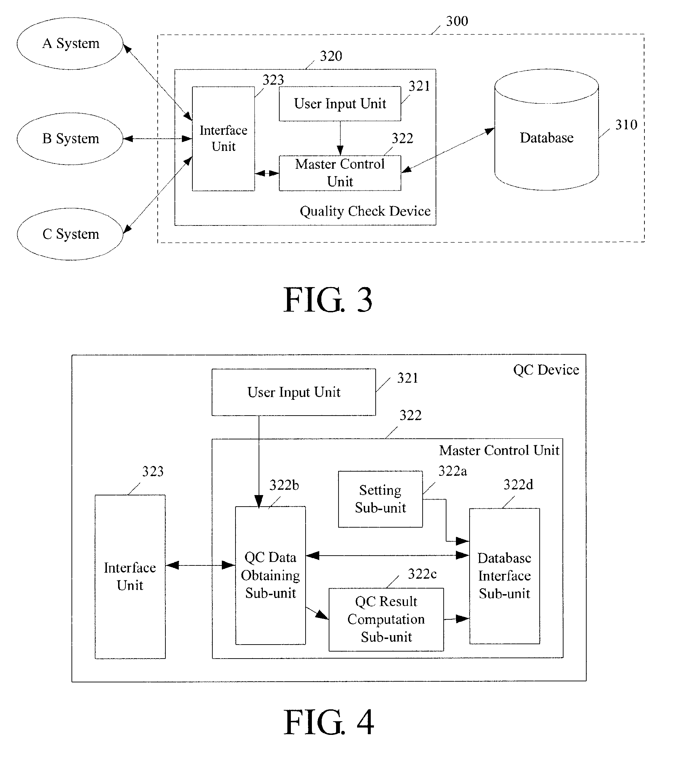

Fig. 3 is a detailed structure diagram of a QC system according to an embodiment of the present invention. As shown in Fig. 3, the QC system 300 includes a database 310 and a QC device 320. The QC device 320, as an overall structure of a QC device provided by the embodiment, includes a user input unit 321 and a master control unit 322, and may further include an interface unit 323.

In the QC system 300, the database 310 stores all the QC objects, QC contents and QC results.

The user input unit 321 in the QC device 320 transmits, to the master control unit 322, the QC objects and their QC contents received from the user.

The master control unit 322 sets the QC objects and their QC contents according to QC data from different systems; and the QC objects and their QC contents are stored in the database 310. The master control unit 322 also searches the QC objects and QC content stored in the database 310 for the system where the QC data needed for the QC is located, according to the QC objects and their QC contents received by the user input unit 321, and specifies the interface unit 323 to obtain the corresponding QC data from the system. The master control unit 322 further computes QC results according to the obtained QC data, and provides the QC results to the database 310.

The interface unit 323 communicates with a plurality of external systems such as A, B and C systems, and obtains corresponding QC data from the system specified by the master control unit 322.

An embodiment of the present invention also provides an implementation for the QC device 320. Fig. 4 illustrates the detailed structure of the QC device according to the embodiment. As shown in Fig. 4, the QC device includes a user input unit 321 and a master control unit 322, and may further include an interface unit 323.

The master control unit 322 includes a setting sub-unit 322a, a QC data obtaining sub-unit 322b, a QC result computation sub-unit 322c and a database interface sub-unit 322d. It is seen that the QC device shown in Fig. 4 has the same overall structure as that shown in Fig. 3. The detailed structure of the master control unit 322 is illustrated in Fig. 4.

In the QC device shown in Fig. 4, the setting sub-unit 322a sets the QC objects and their QC contents according to QC data from different systems, and stores the QC objects and their QC contents, through the database interface sub-unit 322d, in a database, e.g., the database 310 shown in Fig. 3.

The QC data obtaining sub-unit 322b searches the database for the system where the QC data needed for the QC is located, through the database interface sub-unit 322d and according to the QC objects and their QC contents received from the user input unit 321, specifies the interface unit 323 to obtain the corresponding QC data from the system, and transmits the obtained QC data to the QC result computation sub-unit 322c.

The QC result computation sub-unit 322c computes QC results according to the received QC data and provides the QC results to the database through the database interface sub-unit 322d.

The data is communicated between the database interface sub-unit 322d and the database.

The above is the detailed implementations of the QC system and QC device according to the embodiments of the present invention. It is seen that the QC system and device may be used to perform hierarchical QC on the service representatives of a plurality of systems. The QC method according to the embodiment of the present invention may be implemented in the QC system. Next, the detailed flow of the QC method according to the embodiment will be described with reference to performing QC in a QC system and QC device conforming to the above structure in the customer service center.

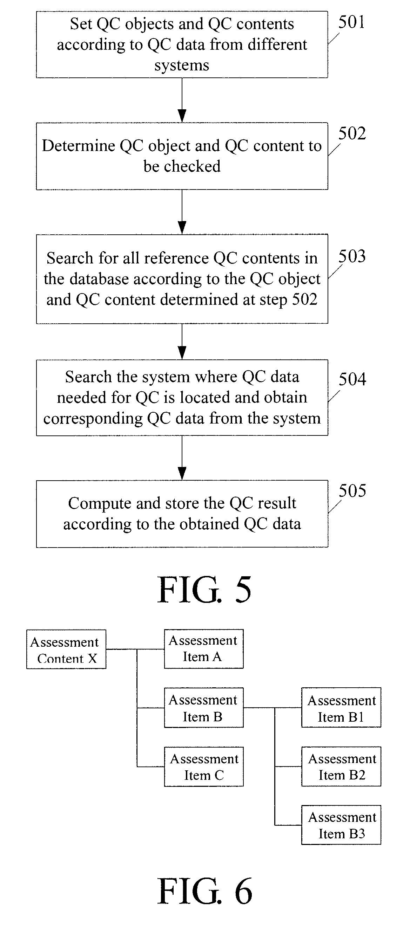

Fig. 5 is a detailed flow chart of the QC method according to an embodiment of the present invention. As shown in Fig. 5, the method includes:
Step 501: Setting QC objects and their QC contents according to QC data of different systems.

The QC is performed on the QC objects and their QC contents, on the basis of certain QC data (i.e., the specific working condition of the QC objects), thereby obtaining corresponding QC results. Therefore, setting the QC objects and their QC contents that may be checked in the embodiment is based on the QC data provided by different systems, so that the QC objects and their QC contents that can be reflected by QC data are determined.

There is a subordinate relationship between the QC contents and QC objects.

Each of QC contents uniquely corresponds to one QC object; while one QC object may include several QC contents, i.e., it may correspond to several QC contents.

A QC object may also be referred to as an assessment object; and a name, type, description and status of the assessment object are recorded therein. It may support multi-level hierarchy, which means that the assessment objects form a tree structure.

The QC contents may also support multi-level hierarchy. When the QC contents are in a single level, there is QC data corresponding to the QC contents, and the QC contents include corresponding QC objects, the identification (ID) and grade criterion of the system where the QC data is located, and at least one of QC grade computation formula and QC grade weight. When the QC contents are in multi levels, each of QC contents includes corresponding QC object and at least one of QC grade computation formula and QC grade weight; at least QC contents at the leaf node levels correspond to QC data respectively, and the QC contents at the leaf node levels further include the ID and grade criterion of the system where the QC data is located. For example, in the QC system at the customer service center, the QC contents include at least two levels, that is, assessment content and assessment item. One assessment content may include several assessment items. Furthermore, an assessment item may further include several assessment sub-items.

Specifically, at the customer service center, an example of the tree relationship between the assessment objects, assessment contents and assessment items is as follows:
foreground service representative (assessment object)
   service flow (assessment content)
      greeting/tag (assessment item)
      processing specification
      manner of service
   language skill
background service representative
   service flow
      work note record
      processing specification
   manner of service
   language skill

When storing the QC objects and QC contents, the QC objects may be stored according to the manner shown in Table 1.

**Table 1: Format for storing QC objects**

| ID | ParentID | Name | Type | Description | Status |
|---|---|---|---|---|---|
| 01 | 0 | Foreground service representative | 0 | XXX | 1 |
| 0101 | 01 | Group 1 | 0 | XXX | 1 |
| 0102 | 01 | Group 2 | 0 | XXX | 1 |
| 02 | 0 | Background service representative | 1 | XXX | 0 |

As shown in Table 1, the assessment object table stores all the assessment objects that are assessable by their types. The fields in the table include:
ID: the identification number of the assessment object for uniquely identifying an assessment object;
ParentID: the identification number of a parent of the assessment object, which supports multi-level hierarchy of assessment objects;
Name: the name of the assessment object;
Type: the type of service representatives that corresponds to the assessment object, for example, "0" indicating a foreground service representative, and "1" indicating a background service representative;
Description: a brief description of the assessment object; and
Status: indicating whether the assessment object is valid.

When storing the QC content, it basically includes name, grade criterion and the assessment object to which it belongs, and at least one of QC grade computation formula and QC grade weight. If the QC contents are multi-level hierarchical, then it is necessary to provide an extended field to indicate the relationship between the multi levels of QC contents.

In the embodiment, the QC content includes two levels, i.e., the assessment content and assessment item.

**Table 2: Format for storing the assessment contents**

| ID | Parent ID | Object ID | Name | weight | level | Grade range | Grade criterion | Descryiption | Formula | System ID |
|---|---|---|---|---|---|---|---|---|---|---|
| 01 | 0 | 0101 | Service flow | 1 | 0 | 0-100 | XXX | XXX | XXX | A |

As shown in Table 2, the assessment content table stores the assessment contents. The fields in the table include:
ID: the identification number of the assessment content;
ParentID: the identification number of a parent of the assessment content, which supports multi-level hierarchy of assessment contents;
ObjectID: the identification number of the assessment object uniquely corresponding to the assessment content;
Name: name of the assessment content;
Weight: weight of the assessment content;
Level: indicating the level of the item, e.g., 0 representing assessment content;
Range: the grade range of the item;
Grade criterion: the grading rule of the item;
Description: a brief description of the item;
Equation: the equation for computing the QC result of the assessment content; and
System ID: a source system ID of the QC data corresponding to the assessment content.

As shown in the above, the storage fields of the assessment content include not only basic fields such as Name, but also extended fields such as the Description. The field "Equation" shows the way of computing the QC grade of the assessment content, that is, the QC data is computed according to the recorded equation to obtain the QC result. The field "Weight" shows the weight of the QC grade of the QC content in the QC grade of the QC content of its parent node. The format for saving the assessment items is as Table 3:

**Table 3: Format for saving the assessment items**

| ID | Parent ID | Object ID | Name | Weight | Level | Grade item | Range | Grade criterion | Description | System ID |
|---|---|---|---|---|---|---|---|---|---|---|
| 01 | 0 | 01 | Record assessment | 1 | 0 | 0 | 0-100 | XXX | XXX | |
| 0101 | 01 | 01 | Mood and speed of speaking | 0.6 | 1 | 1 | 0-100 | XXX | XXX | A |
| 0102 | 01 | 01 | tone | 0.4 | 1 | 1 | 0-100 | XXX | XXX | B |
| ... | | | | | | | | | | |

As shown in Table 3, the assessment item table saves the assessment items of the assessment contents. The fields in the table are as follows:
ID: the identification number of the assessment item;
ParentID: the identification number of the parent of the assessment item, which supports multi-level hierarchy of assessment items;
ObjectID: the identification number of the assessment content that uniquely corresponds to the assessment item;
Name: name of the assessment content/assessment item;
Weight: weight of the assessment content/assessment item;
Level: indicating the level of the item, e.g., 0 representing assessment content, 1 representing assessment item;
Grade item: indicating whether the item is a grade item;
Range: the grade range of the item;
Grade criterion: rule for grading the item;
Description: a brief description of the item; and
System ID: a source system ID of the QC data corresponding to the assessment content.

Of course, an equation may also be included in the assessment item table as the QC grade computation formula of the assessment item.

The QC objects and their QC contents as well as their corresponding relationship may be stored in the database using the above three tables, which also support multi-level hierarchy of the QC objects and QC contents.

When performing QC, the following operations are performed:
Step 502: Determining the QC object to be checked and its QC content.

In this step, the QC object and its QC content are determined according to the user input or predefinition. The QC object and QC content may be specified with certain identification, such as a number or name. In the embodiment, it is assumed that QC is performed on the service flow of Group 1 of foreground service representatives.

In the method of the embodiment, a uniform QC operation interface can be provided for the user, so that the user can input the QC object and QC content to be checked.

Step 503: Searching the database for all reference QC contents according to the QC object and its QC content determined at step 502.

In the embodiment, the QC objects and QC contents are stored in the database in the forms shown in Tables 1 to 3. At this step, the QC object ID is used to look for an identification number of the corresponding assessment object, and the QC content ID is used to look for the assessment content uniquely corresponding to the identification number of the assessment object and the assessment item of the sub-nodes of the assessment content. The specified assessment content and the assessment items of all its sub-nodes are taken as reference QC contents.

As shown in Tables 1 to 3, the identification number of Group 1 of foreground service representatives is 0101, the identification number of the corresponding assessment content which is a service flow is 01, and the assessment items that correspond to the assessment content with the number 01 include a level 1 assessment item, i.e., an assessment of recorded sound (record assessment), which further includes two level 2 assessment items, i.e., mood and speed of speaking as well as tone.

Step 504: Searching the system where QC data needed for the QC is located and obtaining corresponding QC data from the system.

It is seen from the reference QC content determined at step 503 that the embodiment provides multi levels of QC contents. Normally, it only needs to obtain the QC data of the QC content with a valid grade item and grade it according to the grade criterion. The QC grade is passed to an upper level in turn, and the upper level computes the QC grade of the level using a predetermined way according to the grade of the lower level. Finally, the QC grade for the uppermost level of QC content is obtained, i.e., the QC result of the QC content determined at step 402.

In the embodiment, only the last level has a valid assessment item, thus it only needs to obtain the QC data of the level 2 assessment item.

The user may obtain the data of each system through the uniform QC operation interface. When obtaining a needed QC data, the QC device searches the system where the QC data is located, according to the QC content set at step 501, and obtains the corresponding QC data from the system automatically or with the help of the user. For example, when performing QC on the foreground service representative, QC data of the call record that may be obtained from the seat system includes: time of call, call length, reception staff, user city, user brand, user level etc. When performing QC on the background service representative, QC data of work order that may be obtained from the work flow includes: content of work order, handler, current status, handling step etc.

When obtaining the QC data, the system obtaining the data is determined according to the ID of the system where the QC data is located; the name and ID of the operation to be performed is selected according to the interface configuration between the QC system and other systems; and the corresponding operation instruction and parameter are sent to the system, to obtain the QC data. The interface configuration specification for the interaction between the QC system and the other systems includes: QC data source number, the operation ID, the operation name, the operation type and the operation instruction and parameter. The interface configuration may be defined as follows:

**Table 4: Interface configuration definition**

| SID | LOGIC ID | LOGICNAME | LOGIC TYPE | LOGICINTERFACE |
|---|---|---|---|---|
| 0 | 0 | QC assessment flag back-written flag back-written | 0 | ICDSC_P_QC_MODCHECKFLAG ∼<SERIALNO>∼<FLAG>∼<RECORDNUM>∼ <SOURCE> |
| 0 | 1 | obtaining other info on the serial number being checked | 0 | ICDSC_P_QC_GETINFOFOREVTCOMMONI NFO ∼<SERIALNO> |
| 0 | 2 | obtaining link address of basic info on the serial number | 0 | ICDSC_P_QC_GETRECORDNUMBASEINFO ∼<SERIALNO>,<OBJECTID>,<CONTENTID >,<SERVICECLASSID> |
| 0 | 3 | extracting data when performing auto QC | 0 | ICDSC_P_QC_AUTOGETRECORDFORCHE CK ∼<OBJECTID>∼<CONTENTID>∼<STAFFNO >∼<EVTERNO>∼<WHERE> |
| 1 | 0 | QC assessment flag back-written | 0 | ICDSC_P_QC_MODCHECKFLAG ∼<SERIALNO>∼<FLAG>∼<RECORDNUM>∼ <SOURCE> |
| 1 | 1 | obtaining other info on the serial number being checked | 0 | ICDSC_P_QC_GETINFOFOREVTPROCESSH IS ∼<SERIALNO> |
| 1 | 2 | obtaining link address of basic info on the serial number | 0 | ICDSC_P_QC_GETRECORDNUMBASEINFO ∼<SERIALNO>,<OBJECTID>,<CONTENTID >,<SERVICECLASSID> |
| 1 | 3 | extracting data when performing auto QC | 0 | ICDSC_P_QC_AUTOGETRECORDFORCHE CK ∼<OBJECTID>∼<CONTENTID>∼<STAFFNO >∼<EVTERNO>∼<WHERE> |
| 2 | 0 | QC assessment flag back-written | 0 | ICDSC_P_QC_MODCHECKFLAG ∼<SERIALNO>∼<FLAG>∼<RECORDNUM>∼ <SOURCE> |
| 2 | 1 | obtaining other info on the serial number being checked | 0 | ICDSC_P_QC_GETINFOFOREVTINFO ∼<SERIALNO> |
| 2 | 2 | obtaining link address of basic info on the serial number | 0 | ICDSC_P_QC_GETRECORDNUMBASEINFO ∼<SERIALNO>,<OBJECTID>,<CONTENTID >,<SERVICECLASSID> |
| 2 | 3 | extracting data when performing auto QC | 0 | ICDSC_P_QC_AUTOGETRECORDFORCHE CK ∼<OBJECTID>∼<CONTENTID>∼<STAFFNO >∼<EVTERNO>∼<WHERE> |

Where, the table includes following fields:
SID: source ID, which is configured according to different data source, e.g., 0 represents seat, 1 represents work flow and 2 represent voluntary service etc.
LogicID: logic ID, that is the operation ID.
LogicName: logic name, i.e., operation name.
LogicType: logic type, i.e., operation type (0: Store procedure, 1: Dynamic Library, 2: link).
LogicInterface: logic content, which includes logic parameter and supports dynamic parameter, i.e., corresponding parameters of the operation.

In the table, an operation with the name of "QC assessment flag back-written" represents that the QC data has been extracted to the QC system during the current QC procedure; normally, this QC assessment flag is written to the system providing the QC data, after the QC data is extracted. An operation with the name of "obtaining other info on the serial number being checked" represents the operation of extracting QC data from the QC system; the other information is sent to the system providing the QC data, when QC data is to be extracted. An operation with the name of "obtaining link address of basic info on the serial number" represents that the system providing the QC data may obtain the address of the QC data; the link address is normally sent to the system when the QC data corresponding to the QC content is not directly stored in the system providing the QC data, so that the system may obtain the QC data according to the address information. An operation with the name of "extracting data when performing auto QC" represents that the system providing the QC data is instructed to provide the QC data according to a predefined rule.

When a new system is added to the customer service center, it may perform QC on the corresponding service representatives of the new system, once the interface between the new system and the current QC system is customized according to the above interfaces provided by the QC system.

Step 505: Computing QC result according to the QC data obtained at step 504 and saving the QC result.

When computing the QC result, the computation flow may vary due to that the way of setting QC contents in the database might be different.

If the set QC content is single level QC content, the detailed flow for computing the QC result includes:
Step 505a1: Grading the QC content according to the obtained QC data and with reference to the grade criterion in the QC content determined at step 502.

When performing the grading, the QC content is graded based on the obtained QC data and with reference to the grade criterion, grade range and the like corresponding to the QC content obtained at step 501.

Step 505a2: Computing the QC result of the QC content according to the grading result of the QC content.

Specifically, when the QC content includes a QC grade computation formula, the grade result of the QC content is computed according to the computation formula and the computation result is taken as the QC result. When the QC content does not include QC grade computation formula, the grade result of the QC content is taken as the QC result.

If the set QC content is multi level QC content, as in the embodiment, the detailed flow for computing the QC result includes:
Step 505b1: Computing the QC grade of the QC content corresponding to the QC data, according to the obtained QC data.

Specifically, the way of QC grade computation for the QC content corresponding to the QC data is similar to the way of QC result computation for single level QC content. Specifically, in the embodiment, the assessment item of "mood and speed of speaking" is graded according to the obtained QC data for the mood and speed of speaking and with reference to the grade range, grade criterion for the mood and speed of speaking and the like shown in Table 3, and the QC grade is computed according to the grading result. The grade of the assessment item of "tone" is computed in a similar way.

Step 505b2: Computing the QC grade of other reference QC content according to the QC grade computed at step 505b1.

Specifically, the way of computing QC grade of the other QC content may include: computation using weight and computation using formula.

The computation using formula involves: grading QC contents of direct sub-nodes of the QC content, according to the formula in the QC content set at step 501, to obtain the QC grade of the QC content.

The computation using weight involves: computing QC result of the QC content, according to the QC grade weight of QC contents of direct sub-nodes of the QC content set at step 501 and the QC grade of the QC contents of the direct sub-nodes. For example, the QC grade weighted summation of the QC contents of all the direct sub-nodes subordinate to the QC content may be taken as the QC grade of the QC content.

Under default condition, the computation using formula has a higher priority than the computation using weight.

Step 505b3: Taking the QC grade of the QC content determined at step 502 as the QC result.

Specifically, in the embodiment, the customer service center provides assessment content and assessment item. The assessment content may not graded directly, thus, the QC result of the assessment content has to be computed according to the QC grade of assessment items in the lower level. Specifically, when performing the computation, if a formula for the assessment item is set, then the QC result is computed according to the formula; otherwise, the QC result is computed according to the weights of the assessment items in the lower levels.

Level 1 assessment item, i.e., record assessment, may not be graded directly, thus its QC grade needs to be computed according to the QC result of the assessment items in its lower level (i.e., the mood and speed of speaking and tone). In the specific computation, if a formula for the assessment item is set, then it is computed according to the formula; otherwise, it is computed according to the weights of the assessment items in the lower level.

Level 2 assessment items, i.e., the mood and speed of speaking and tone, may be graded directly and its QC grade is computed according to its own grade. In the specific computation, if a formula for the assessment item is set, then it is computed according to the formula; otherwise, since the assessment item is the QC content at the lowest level, its QC grade is the grade result of the assessment item.

Finally, the QC grade of Level 1 assessment item (record assessment) is stored in the database as the QC result of the current QC.

Fig. 6 shows an assessment content including two levels of assessment items. The Table 5 illustrates QC result computation rule for the QC structure.

It is seen from Table 5 that the QC grade of each level of QC content may be computed and QC grade of each level may be recorded in the database. The user may determine different QC granularities according to the QC requirements and extract the needed QC grade as the QC result. The flow of the QC method of the embodiment ends here.

In the above embodiment, the QC system at the customer service center is taken as an example to explain the whole flow of the QC method according to the embodiment of the present invention. In the embodiment, QC on record assessment of the foreground service representatives is performed. Of course, the determined QC content may be of finer granularity, and the method flow of the specific QC is similar to the above procedure. The whole QC object may be assessed synthetically, and the overall QC result of the QC object is obtained from the weight summation of the QC grades of all the QC contents corresponding to the determined QC object.

**Table 5: Computation rule of the QC result**

| Formula of assessment content | X=X1*0.3+X2*0.3+X3*0.4, where X1, X2, X3 represent assessment items A, B, C respectively | | No formula for assessment content | |
|---|---|---|---|---|
| Weight of assessment item | Weight of assessment item A is 0.2, that of B is 0.4 and that of C is 0.4. Weight of assessment item B1 is 0.3, that of B2 is 0.4 and that of B3 is 0.3. | | Weight of A is 0.2, that of B is 0.4 and that of C is 0.4. Weight of B1 is 0.2, that of B2 is 0.4 and that of B3 is 0.4. | |
| Equation of assessment item | Formula is defined for assessment item B, the formula is: X1*0.4+X2*0.4+X 3*0.2 , where X1, X2, X3 represent assessment items B1, B2, B3 respectively | No formula for assessment item B. | Formula is defined for assessment item B, which is: X1*0.4+X2*0 .4+X3*0.2 , where X1 X2, X3 represent assessment items B1, B2, B3 respectively | No formula for assessment item B. |
| Grade computation rule | Grade of B=grade of B1*0.4+grade of B2*0.4+grade of B3*0.2, weight of level 2 assessment item is invalid | Grade of B = Grade of B1 * 0.3+ Grade of B2 * 0.4 + Grade of B3 *0.3; Grade of B is computed according to weights of level 2 assessment items B1, B2, B3 | Grade of B = Grade of B1* 0.4+ Grade of B2*0.4+ Grade of B3* 0.2; weight of level 2 assessment item is invalid | Grade of B = Grade of B1 *0.2+ Grade of B2*0.4+ Grade of B3* 0.4; Grade of B is computed according to weights of level 2 assessment items B1, B2, B3 |
| | Grade of assessment content = Grade of A *0.3+ Grade of B *0.3+ Grade of C *0.4 Grades of A, C, B1, B2, B3 is defined by the checker directly, weight of level 1 assessment item is invalid | | Grade of assessment content = Grade of A *0.2+ Grade of B *0.4+ Grade of C *0.4 Result is computed according to weights of level 1 assessment items A, B, C | |

It is seen from the embodiment of the above system and method that the QC system and method of the embodiment provide a uniform QC standard for the service representatives of a multiple of systems. QC data needed for the QC is obtained from different systems by use of a uniform QC data input, and the QC result is computed by a uniform manner and output to a database. Thus, with the QC system and method, a uniform hierarchical QC can be performed on the service representatives of different systems; and the QC results are stored uniformly in the same database, for convenient query, statistic, analysis and the like.

The above is merely preferred embodiments of the disclosure, and is not intended to limit the scope of the disclosure. Any modification, equivalent substitution and improvement within the spirit and scope of the disclosure are intended to be included in the scope of the disclosure.

## Claims

1. A method for quality check (QC), comprising:
determining a QC object to be checked and a QC content corresponding to the QC object;
according to the determined QC object and the QC content, searching a system where QC data needed for the QC is located, to obtain corresponding QC data from the system; and
computing a QC result according to the obtained QC data.

2. The method of claim 1, further comprising the following step prior to the determining the QC object and the QC content:
setting the QC object and the QC content, according to QC data from different systems.

3. The method of claim 2, wherein the set QC object comprises a single level assessment object or a multi level assessment object, and the set QC content comprises a single level assessment content or a multi level assessment content.

4. The method of claim 3, wherein when the set QC content is a single level assessment contents, there is QC data corresponding to the QC content, and the QC content comprises a corresponding QC object, an identifier (ID) and a grade criterion of the system where the QC data is located, and one or two of a QC grade computation formula and a QC grade weight.

5. The method of claim 4, wherein the computing a QC result according to the obtained QC data comprises:
grading the QC content, according to the obtained QC data and the grade criterion in the QC content;
when the QC content comprises a QC grade computation formula, computing the grade result of the QC content according to the QC grade computation formula, to provide the computed result as the QC result; and
when the QC content does not comprise a QC grade computation formula, providing the grade result of the QC content as the QC result.

6. The method of claim 3, wherein when the set QC contents are multi level assessment contents, each of the QC contents comprises a corresponding QC object, one or two of the QC grade computation formula and a QC grade weight, and a QC content of a corresponding parent node;
at least the QC contents at a leaf node level correspond to QC data respectively; and
each of QC contents at the leaf node level further comprises an ID and a grade criterion of the system where the QC data is located.

7. The method of claim 6, wherein the computing QC result according to the obtained QC data comprises:
taking the determined QC contents and the QC contents of all sub-nodes as reference QC contents for the QC;
computing a QC grade of the QC content corresponding to the obtained QC data according to the obtained QC data;
computing QC grades of other reference QC contents, according to the computed QC grade of the QC content corresponding to the QC data; and
taking the QC grades of the determined QC contents as the QC result.

8. The method of claim 7, wherein the computing QC grade of the QC content corresponding to the obtained QC data according to the QC data comprises:
grading the QC content, according to the obtained QC data and the grade criterion in the QC content corresponding to the obtained QC data;
computing the grade result of the QC content according to a QC grade computation formula and taking the computed result as the QC grade, when the QC content comprises the QC grade computation formula; and
taking the grade result of the QC content as the QC grade, when the QC content does not comprise a QC grade computation formula.

9. The method of claim 8, wherein the computing QC grades of other reference QC contents according to the computed QC grade of the QC content corresponding to the QC data comprises:
when the other reference QC contents comprise a QC grade computation formula and the QC contents of all direct sub-nodes do not include a QC grade weight, computing the QC grades of the QC contents of the direct sub-nodes according to the QC grade computation formula, and taking the computed result as the QC grade of the QC content;
taking a weight summation of the QC grades of the QC contents of all direct sub-nodes as the QC grade of the QC content, when the other reference QC contents do not comprise a QC grade computation formula and the QC contents of all direct sub-nodes comprise QC grade weights; and
computing the QC grade by using the QC grade computation formula or the QC grade weight, when the other reference QC contents comprise the QC grade computation formula and the QC contents of all direct sub-nodes comprise a QC grade weight.

10. The method of claim 4 or 6, wherein the searching a system where the QC data needed for the QC is located comprises:
determining whether the determined QC content corresponds to the QC data;
wherein if the determined QC content corresponds to the QC data, the ID of the system where the QC data corresponding to the QC content is located points to the system where the QC data needed for the QC is located; and
if the determined QC content does not correspond to the QC data, searching for all QC contents having corresponding QC data in the sub-node level of the determined QC content, wherein the ID of the system where the QC data corresponding to the QC content is located points to the system where the QC data needed for the QC is located.

11. The method of claim 4 or 6, further comprising:
setting interface configuration for obtaining QC data from different systems;
wherein the obtaining the corresponding QC data from the system comprises:
determining a system from which the QC data is obtained according to an ID of the system where the QC data is located; choosing an operation name and an ID to be performed according to the interface configuration; sending corresponding operation instruction and parameter to the system; and obtaining the QC data.

12. The method of claim 11, wherein the interface configuration comprises: a QC data source number, an operation ID, an operation name, an operation type and an operation instruction and a parameter.

13. The method of claim 11, further comprising:
customizing interfaces of a new system according to the interface configuration, when adding the new system where the QC data is located.

14. The method of claim 1, after the computing the QC result, further comprising:
storing the QC result.

15. A QC device, comprising a user input unit and a master control unit; wherein
the user input unit is adapted to transmit to the master control unit a QC object and a QC content corresponding to the QC object received from a user; and
the master control unit is adapted to search for a system where QC data needed for the QC is located, according to the QC object and the QC content received from the user input unit, obtain the corresponding QC data from the system and compute a QC result according to the obtained QC data.

16. The QC device of claim 15, further comprising an interface unit which is adapted to communicate with a plurality of external systems and obtain the QC data from the system where the QC data needed for the QC is located, which is searched out by the master control unit.

17. The QC device of claim 16, wherein the master control unit comprises a setting sub-unit, a QC data obtaining sub-unit, a QC result computation sub-unit and a database interface sub-unit;
the setting sub-unit is adapted to set the QC object and the QC content according to QC data from different systems, and store the QC object and the QC content in a database through the database interface sub-unit;
the QC data obtaining sub-unit is adapted to search the database for a system where the QC data needed for the QC is located, through the database interface sub-unit and according to the QC object and the QC content received from the user input unit, and instruct the interface unit to obtain the corresponding QC data from the system, and transmit the obtained QC data to the QC result computation sub-unit;
the QC result computation sub-unit is adapted to compute QC results according to the received QC data and store the QC results in the database through the database interface sub-unit; and
the database interface sub-unit is adapted to exchange data with the database.

18. A QC system, comprising a database and a QC device, wherein the QC device comprises a user input unit and a master control unit;
the database is adapted to store a QC object, a QC content and a QC result;
the user input unit is adapted to transmit to the master control unit the QC object and the QC content received from a user;
the master control unit is adapted to set the QC object and the QC content corresponding to the QC object according to QC data from different systems and store the QC object and the QC content in the database; search the QC object and the QC content stored in the database for a system where QC data needed for the QC is located, according to the QC object and the QC content received from the user input unit; obtain the corresponding QC data from the system; compute a QC result according to the obtained QC data; and store the computed QC result in the database.

19. The QC system of claim 18, wherein the QC device and database is a client/server structure or a browser/server structure.
